# EUROPÄISCHE PATENTSCHRIFT

(11) **EP 2 813 528 B1**
(45) Veröffentlichungstag und Bekanntmachung des Hinweises auf die Patenterteilung: **19.12.2018**
(21) Anmeldenummer: 13171553.4
(22) Anmeldetag: 11.06.2013
(51) Int. Cl.: C08G 65/336, C08L 71/02, C08K 5/5399

(54) **HÄRTBARE ZUSAMMENSETZUNG AUF BASIS VON ALKOXYSILANGRUPPEN-HALTIGEN POLYETHERN UND EINER PHOSPHAZEN-BASE**
CURABLE COMPOSITION ON THE BASIS OF POLYETHERS CONTAINING ALKOXYSILANE GROUPS AND A PHOSPHAZENE BASE
COMPOSITION DURCISSABLE À BASE DE POLYÉTHERS CONTENANT DES GROUPES ALKOXYLANES ET D'UNE BASE PHOSPHAZÈNE

(43) Veröffentlichungstag der Anmeldung: 17.12.2014
(73) Patentinhaber: Sika Technology AG, 6340 Baar (CH)
(72) Erfinder: Cannas, Rita, 8600 Dübendorf (CH); Burckhardt, Urs, 8049 Zürich (CH)
(74) Vertreter: Sika Patent Attorneys

(56) Entgegenhaltungen:
- WO-A1-2011/090046
- WO-A1-2012/003160
- JP-A- 2007 016 124
- US-A1- 2007 004 821
- US-A1- 2007 173 557

## Beschreibung

### Technisches Gebiet

Die Erfindung betrifft härtbare Zusammensetzungen auf Basis von Alkoxysilangruppen-haltigen Polyethern und einer Phosphazen-Base (I) in Anwesenheit von mindestens einem Organotitanat oder -zirkonat und die Verwendung der Phosphazen-Base (I) in Anwesenheit von mindestens einem Organotitanat oder -zirkonat als Katalysator für die Aushärtung von Alkoxysilangruppen-haltigen Polyethern sowie die Verwendung der Zusammensetzung und daraus erhältliche Produkte.

### Stand der Technik

Alkoxysilangruppen-haltige Polyether gehören zur Gruppe der Polymere, welche allgemein als "silanfunktionelle Polymere" oder "silanmodifizierte Polymere" (SMP) oder "silanterminierte Polymere" (STP) bezeichnet werden.

Sie reagieren unter dem Einfluss von Feuchtigkeit durch Vernetzung der Alkoxysilangruppen zu Kunststoffen aus und spielen eine bedeutende Rolle als Bindemittel in härtbaren Zusammensetzungen, welche in vielen technischen Anwendungen eingesetzt werden, beispielsweise als Dichtstoffe, Klebstoffe und Beschichtungen. Die Vernetzungsreaktion verläuft zweistufig, wobei die Alkoxysilangruppen zuerst zu Silanolgruppen hydrolysieren, welche dann zu Siloxangruppen kondensieren.

Zur Beschleunigung der Aushärtung werden meist Katalysatoren eingesetzt. Sehr oft handelt es sich dabei um toxikologisch bedenkliche Stoffe, welche eine potentielle Gefährdung von Verarbeiter und Umwelt darstellen. Dies gilt insbesondere für die breit eingesetzten Organozinn-Verbindungen, insbesondere Dialkylzinn(IV)carboxylate, wie z.B. Dibutylzinndilaurat, welche sich durch eine hervorragende Aktivität in Bezug auf die Vernetzungsreaktion sowie eine gute Hydrolysebeständigkeit auszeichnen, aber gesundheitsschädlich und stark wassergefährdend sind.

Aufgrund der Toxizität der Organozinn-Verbindungen wurden in letzter Zeit vermehrt Anstrengungen unternommen, diese durch andere, weniger toxische Katalysatoren auszutauschen. So wurden etwa Organotitanate, Organozirkonate und Organoaluminate als Ersatzkatalysatoren eingesetzt. Diese haben aber eine geringere Aktivität in Bezug auf die Vernetzungsreaktion, so dass sie eine deutlich langsamere Vernetzung des Alkoxysilangruppen-haltigen Polyethers und eine lange anhaltende Restklebrigkeit bewirken. Ausserdem sind sie wenig hydrolysebeständig, so dass die Vernetzungsgeschwindigkeit über die Zeit nachlässt und dadurch die Lagerfähigkeit von Zusammensetzungen einschränkt.

Die Vernetzung lässt sich durch Mitverwendung von starken Basen als CoKatalysatoren beschleunigen. Amidine oder Guanidine, wie insbesondere 1,8-Diazabicyclo[5.4.0]undec-7-en (DBU) und 1,1,3,3-Tetramethylguanidin (TMG), haben sich dafür als besonders geeignet erwiesen. Diese Verbindungen sind aber leichtflüchtig und geruchsintensiv sowie gesundheitsschädlich und umweltgefährdend. Außerdem neigen sie dazu, nach der Applikation aufgrund einer geringen Verträglichkeit mit dem ausgehärteten Kunststoff aus diesem zu migrieren, und dadurch Ausschwitzen oder Substratverschmutzung zu verursachen.

US 5688888 und US 6284859 beschreiben die Verwendung von Phosphazen-Basen bzw. Salzen davon zur Polymerisation von Hydroxysilylgruppen-terminierten Polydimethylsiloxanen.

WO 2012/003160 beschreibt die Verwendung von basischen Verbindungen, wie Amidinen, Guanidinen und Phosphazen-Basen, als Katalysatoren in Zusammensetzungen auf Basis einer Kombination von Hydrosilylgruppenhaltigen Polymeren und Hydroxysilylgruppen-haltigen Polymeren. Das Dokument US-A-2007/0173557 offenbart kondensationsvernetzende Dentalmaterialien enthaltend wenigstens einen alkoxysilylfunktionellen Polyether und einen Katalysator.

### Darstellung der Erfindung

Aufgabe der Erfindung ist es, einen Katalysator für die Vernetzung von Alkoxysilangruppen-haltigen Polyethern bereitzustellen, der die vorstehend genannten Nachteile aus dem Stand der Technik überwindet. Insbesondere soll der Katalysator gegenüber den aus dem Stand der Technik bekannten Vernetzungskatalysatoren eine verbesserte Arbeitssicherheit und einen höheren Umweltschutz bieten und mittels Feuchtigkeit eine schnelle, über die Zeit wenig nachlassende Vernetzung der Alkoxysilangruppen bewirken. Zudem soll der Katalysator eine gute Verträglichkeit mit dem ausgehärteten Kunststoff aufweisen.

Eine weitere Aufgabe der Erfindung ist es, eine Zusammensetzung auf Basis von Alkoxysilangruppen-haltigen Polyethern bereitzustellen, die eine niedrige Gefahreneinstufung erlaubt, eine gute Lagerfähigkeit aufweist und mittels Feuchtigkeit schnell aushärtet. Zusätzlich sollten insbesondere migrationsbedingte Fehler wie Ausschwitzen und Substratverschmutzung nach der Aushärtung der Zusammensetzung verhindert oder zumindest verringert werden.

Diese Aufgaben konnte überraschenderweise durch die Verwendung einer Phosphazen-Base als Katalysator (I) in Anwesenheit von mindestens einem Organotitanat oder -zirkonat gelöst werden.

Gegenstand der Erfindung ist daher die Verwendung einer Phosphazen-Base der Formel (I) 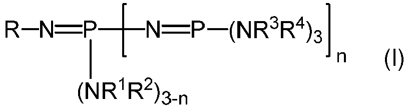 worin
n 0, 1, 2 oder 3 ist;
R ein Wasserstoff-Rest oder ein Alkyl-Rest mit 1 bis 10 Kohlenstoffatomen ist;
R¹ und R² jeweils unabhängig voneinander ein Alkyl-Rest mit 1 bis 10 Kohlenstoffatomen sind oder R¹ und R² zusammen ein Alkylen-Rest mit 4 bis 6 Kohlenstoffatomen bilden, wobei, wenn n 0 oder 1 ist, alternativ zwei Reste R¹ zusammen einen Alkylen-Rest mit 2 oder 3 Kohlenstoffatomen bilden können; und
R³ und R⁴ jeweils unabhängig voneinander einen Alkyl-Rest mit 1 bis 10 Kohlenstoffatomen sind oder R³ und R⁴ zusammen einen Alkylen-Rest mit 4 bis 6 Kohlenstoffatomen bilden, als Katalysator in Anwesenheit von mindestens einem Organotitanat oder - zirkonat für die Vernetzung von Alkoxysilangruppen-haltigen Polyethern mittels Feuchtigkeit.

Ein weiterer Gegenstand der Erfindung ist eine Zusammensetzung umfassend mindestens einen Alkoxysilangruppen-haltiger Polyether und mindestens eine Phosphazen-Base der Formel (I) wie vorstehend definiert.

Die erfindungsgemäße Verwendung als in Anwesenheit von mindestens einem Organotitanat oder -zirkonat zeichnet sich insbesondere dadurch aus, dass die Phosphazen-Base der Formel (I) in Bezug auf Arbeitssicherheit und Umweltschutz vorteilhaft ist, da die Phosphazen-Base weniger toxisch ist als die im Stand der Technik eingesetzten Katalysatoren, und mittels Feuchtigkeit eine schnelle, über die Zeit kaum nachlassende Vernetzung der Alkoxysilangruppen bewirkt. Weiterhin zeichnet sich die Phosphazen-Base der Formel (I) durch eine gute Verträglichkeit mit dem ausgehärteten Kunststoff auf, was sich in einer geringen Migrationsneigung äußert.

Die erfindungsgemäße Zusammensetzung zeichnet sich insbesondere dadurch aus, dass sie eine niedrige Gefahreneinstufung erlaubt, eine gute Lagerfähigkeit aufweist, mittels Feuchtigkeit schnell aushärtet und nach der Aushärtung kaum zu migrationsbedingten Fehlern wie Ausschwitzen und Substratverschmutzung neigt.

### Weg zur Ausführung der Erfindung

Gemäß der Erfindung wird eine Phosphazen-Base der Formel (I) als Katalyin Anwesenheit von mindestens einem Organotitanat oder -zirkonat für die Vernetzung von Alkoxysilangruppen-haltigen Polyethern mittels Feuchtigkeit verwendet. Feuchtigkeit bezieht sich auf die Anwesenheit von Wasser, wobei im Allgemeinen die Luftfeuchtigkeit ausreicht. Durch die Feuchtigkeit wird die vorstehend erläuterte zweistufige Reaktion aus der Hydrolyse der Alkoxysilangruppen unter Bildung von Silanolgruppen und der anschließenden Kondensation der Silanolgruppen zu Siloxangruppen eingeleitet. Die Kondensationsreaktion führt zur Vernetzung des Alkoxysilangruppen-haltigen Polyethers und damit zur Aushärtung. Das ausgehärtete Produkt ist vorzugsweise ein elastischer Kunststoff.

Die Erfindung betrifft auch eine Zusammensetzung umfassend mindestens einen Alkoxysilangruppen-haltigen Polyether und mindestens eine Phosphazen-Base (I) der in Anwesenheit von mindestens einem Organotitanat oder -zirkonat als Katalysator. Die Zusammensetzung ist mittels Feuchtigkeit härtbar, d.h. die Zusammensetzung kann bei Anwesenheit von Feuchtigkeit über den vorstehend beschriebenen Mechanismus ausgehärtet werden.

Im Folgenden wird die erfindungsgemäße Zusammensetzung im Einzelnen erläutert. Alle Angaben beziehen sich auch entsprechend auch für die erfindungsgemäße Verwendung, insbesondere bezüglich der Phosphazen-Base der Formel (I) und ihrer allgemeinen und bevorzugten Ausführungsformen.

Im vorliegenden Dokument bezeichnet der Begriff "Alkoxysilangruppe" oder kurz "Silangruppe" eine an einen organischen Rest gebundene Silylgruppe mit einem bis drei, insbesondere zwei oder drei, hydrolysierbaren Alkoxy-Resten am Silicium-Atom.

Entsprechend bezeichnet der Begriff "Alkoxysilan" oder kurz "Silan" eine organische Verbindung, welche mindestens eine Alkoxysilangruppe aufweist.

Als "Epoxysilan", "Hydroxysilan", "(Meth)acrylatsilan", "Isocyanatosilan", "Aminosilan" bzw. "Mercaptosilan" werden Silane bezeichnet, die am organischen Rest zusätzlich zur Silangruppe eine oder mehrere Epoxy-, Hydroxyl-, (Meth)acrylat-, Isocyanato-, Amino- bzw. Mercaptogruppen aufweisen. Als "primäre Aminosilane" werden Aminosilane bezeichnet, welche eine primäre Aminogruppe aufweisen, also eine NH₂-Gruppe, die an einen organischen Rest gebunden ist. Als "sekundäre Aminosilane" werden Aminosilane bezeichnet, welche eine sekundäre Aminogruppe aufweisen, also eine NH-Gruppe, die an zwei organische Reste gebunden ist.

Als "Hydrosilan" wird eine Silicium-haltige organische Verbindung mit mindestens einer Si-H-Bindung bezeichnet.

Der Begriff "Alkoxysilangruppen-haltiger Polyether" bezeichnet eine mindestens eine Alkoxysilangruppe tragende organische Verbindung, welche eine lineare oder verzweigte Polymerkette umfassend mindestens drei zusammenhängende, gleiche oder unterschiedliche, statistisch verteilte oder blockweise angeordnete Oxyalkylen-Einheiten, die auf polymerisierbare cyclische Ether, insbesondere Alkylenoxide wie Ethylenoxid, Propylenoxid oder Butylenoxid, oder Tetrahydrofuran, zurückgehen können, aufweist. Die Polymerkette kann neben den Oxyalkylen-Einheiten auch funktionelle Gruppen enthalten, z.B. Urethangruppen und/oder Harnstoffgruppen.

Mit "Poly" beginnende Substanznamen, wie Polyol oder Polyisocyanat, bezeichnen Substanzen, die formal zwei oder mehr der in ihrem Namen vorkommenden funktionellen Gruppen pro Molekül enthalten.

Ein Prepolymer ist ein Polymer mit funktionellen Gruppen, das als Vorstufe für die Bildung eines höhermolekularen Polymers dient.

(Meth)acrylat bedeutet Methacrylat oder Acrylat.

Eine einkomponentige Zusammensetzung umfasst alle Bestandteile in einer Komponente. Eine mehrkomponentige bzw. zweikomponentige Zusammensetzung umfasst zwei oder mehr Komponenten, wobei ein Teil der Bestandteile in einer ersten Komponente und der andere Teil der Bestandteile in einer zweiten Komponente oder, soweit mehr als zwei Komponenten vorhanden sind, in mehreren weiteren Komponenten enthalten ist, wobei die Komponenten separat voneinander gelagert werden. Bei einer mehrkomponentigen oder zweikomponentigen Zusammensetzung werden die einzelnen Komponenten in der Regel kurz vor dem Gebrauch miteinander vermischt.

Als "lagerstabil" oder "lagerfähig" wird eine Zusammensetzung bezeichnet, wenn sie bei Raumtemperatur in einem geeigneten Gebinde während längerer Zeit, typischerweise mindestens 3 Monaten bis zu 6 Monaten und mehr, aufbewahrt werden kann, ohne dass sie sich in ihren Anwendungs- oder Gebrauchseigenschaften, insbesondere der Viskosität und der Vernetzungsgeschwindigkeit, durch die Lagerung in einem für ihren Gebrauch relevanten Ausmass verändert.

Das Zahlenmittel des Molekulargewichts Mn wird durch Gelpermeationschromatographie (GPC) gegen Polystyrol-Standard ermittelt.

Das Silan-Equivalentgewicht wird in g/Equivalent bzw. g/Eq angegeben und kann über den mittels Messung im induktiv gekoppelten Plasma (ICP) bestimmten Silicium-Gehalt eines Alkoxysilangruppen-haltigen Polyethers berechnet werden.

Die als Katalysator verwendete oder in der Zusammensetzung enthaltene mindestens eine Phosphazen-Base ist eine Phosphazen-Base der Formel (I) 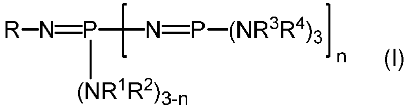 worin
n 0, 1, 2 oder 3 ist;
R ein Wasserstoff-Rest oder ein Alkyl-Rest mit 1 bis 10 Kohlenstoffatomen ist; R¹ und R² jeweils unabhängig voneinander ein Alkyl-Rest mit 1 bis 10 Kohlenstoffatomen sind oder R¹ und R² zusammen einen Alkylen-Rest mit 4 bis 6 Kohlenstoffatomen bilden, wobei, wenn n 0 oder 1 ist, alternativ zwei Gruppen R¹ zusammen einen Alkylen-Rest mit 2 oder 3 Kohlenstoffatomen bilden können; und
R³ und R⁴ jeweils unabhängig voneinander ein Alkyl-Rest mit 1 bis 10 Kohlenstoffatomen sind oder R³ und R⁴ zusammen einen Alkylen-Rest mit 4 bis 6 Kohlenstoffatomen bilden.

Es können eine oder mehrere Phosphazen-Basen der Formel (I) eingesetzt werden. Die Reste R¹ und R² können gleich oder verschieden voneinander sein. Ebenso können die Reste R³ und R⁴ gleich oder verschieden voneinander sein. Wenn mehr als ein Rest R¹ in der Phosphazen-Base der Formel (I) enthalten ist, was für n gleich 0 oder 1 der Fall ist, können die Reste R¹ gleich oder verschieden voneinander sein. Gleiches gilt entsprechend für die Reste R², R³ und R⁴, wenn zwei oder mehr davon enthalten sind.

Beispiele für den Alkyl-Rest mit 1 bis 10 Kohlenstoffatomen für den Rest R sind Methyl, Ethyl, Propyl, Isopropyl, Butyl, sec.-Butyl, tert.-Butyl, 2-Ethylhexyl und tert.-Octyl. Beispiele für den Alkyl-Rest mit 1 bis 10 Kohlenstoffatomen für die Reste R¹ und R² sind Methyl, Ethyl, Propyl, Butyl , Hexyl und Octyl. Beispiele für den Alkyl-Rest mit 1 bis 10 Kohlenstoffatomen für die Reste R³ und R⁴ sind Methyl, Ethyl, Propyl, Butyl, Hexyl und Octyl.

Wenn R¹ und R² bzw. R³ und R⁴ zusammen einen Alkylen-Rest mit 4 bis 6 Kohlenstoffatomen bilden, kann sich eine heterocyclische stickstoffhaltige Ringstruktur wie eine Pyrrolidin-, Piperidin- oder Hexamethylenimin-Ringstruktur ausbilden.

Für den Fall, dass n 0 oder 1 ist, sind in der Phosphazen-Base der Formel (I) 2 oder 3 Gruppen (NR¹R²) enthalten. In diesem Fall können zwei Reste R¹ alternativ zusammen einen Alkylen-Rest mit 2 oder 3 Kohlenstoffatomen bilden, wodurch eine heterocyclische Ringstruktur gebildet wird.

Die Phosphazen-Base ist bevorzugt eine Phosphazen-Base der Formel (I), worin n 0 oder 1 ist.

R ist bevorzugt ein Alkyl-Rest mit 1 bis 10 Kohlenstoffatomen, bevorzugt 1 bis 8 Kohlenstoffatomen, besonders bevorzugt ein Alkyl-Rest mit 4 Kohlenstoffatomen.

Es ist ferner bevorzugt, dass R¹ und R² jeweils unabhängig voneinander ein Alkyl-Rest mit 1 bis 10 Kohlenstoffatomen, bevorzugt 1 bis 4 Kohlenstoffatomen, oder zusammen ein Alkylen-Rest mit 4 Kohlenstoffatomen sind, wobei, wenn n 0 oder 1 ist, alternativ zwei Reste R¹ zusammen einen Alkylen-Rest mit 3 Kohlenstoffatomen bilden können.

Es ist ferner bevorzugt, dass R³ und R⁴ jeweils unabhängig voneinander ein Alkyl-Rest mit 1 bis 10 Kohlenstoffatomen, bevorzugt 1 bis 4 Kohlenstoffatomen, oder zusammen ein Alkylen-Rest mit 4 Kohlenstoffatomen sind.

In einer bevorzugten Ausführungsform ist die Phosphazen-Base eine Phosphazen-Base der Formel (I), worin
n 0 oder 1 ist;
R ein Alkyl-Rest mit 1 bis 10 Kohlenstoffatomen, besonders bevorzugt ein Alkyl-Rest mit 4 Kohlenstoffatomen, ist;
R¹ und R² jeweils unabhängig voneinander ein Alkyl-Rest mit 1 bis 10 Kohlenstoffatomen, bevorzugt 1 bis 4 Kohlenstoffatomen, sind oder R¹ und R² zusammen einen Alkylen-Rest mit 4 Kohlenstoffatomen bilden, wobei, wenn n 0 oder 1 ist, alternativ zwei Reste R¹ zusammen einen Alkylen-Rest mit 3 Kohlenstoffatomen bilden können; und
R³ und R⁴ jeweils unabhängig voneinander ein Alkyl-Rest mit 1 bis 10 Kohlenstoffatomen, bevorzugt 1 bis 4 Kohlenstoffatomen, sind oder R³ und R⁴ zusammen einen Alkylen-Rest mit 4 Kohlenstoffatomen bilden.

Bei den Phosphazen-Basen der Formel (I) handelt es sich um bekannte Verbindungen, die im Handel erhältlich sind oder vom Fachmann ohne weiteres durch allgemein bekannte Syntheseverfahren hergestellt werden können.

Besonders bevorzugte Phosphazen-Basen der Formel (I) sind ausgewählt aus der Gruppe bestehend aus tert.-Butylimino-tris(dimethylamino)-phosphoran (Phosphazen-Base P₁-t-Bu), tert.-Butylimino-tripyrrolidino-phosphoran (BTPP oder Phosphazen-Base P₁-t-Bu-tris(tetramethylen)), tert.-Octylimino-tris(dimethylamino)-phosphoran (Phosphazen-Base P₁-t-Oct), 1-Ethyl-2,2,4,4,4-pentakis(dimethylamino)-2λ⁵,4λ⁵-catenadi(phosphazen) (Phosphazen-Base P₂-Et), 1-tert.-Butyl-2,2,4,4,4-pentakis(dimethylamino)-2λ⁵,4λ⁵-catenadi(phosphazen) (Phosphazen-Base P₂-t-Bu) und 2-tert.-Butylimino-2-diethylamino-1,3-dimethyl-perhydro-1,3,2-diazaphosphorin (BEMP). Diese Verbindungen sind im Handel erhältlich; die nachgestellten Namen in Klammern sind die üblichen Abkürzungen.

Bevorzugte Phosphazen-Basen der Formel (I) sind bei Raumtemperatur flüssig und können deshalb ohne den Einsatz von Lösemitteln eingesetzt werden.

Die Phosphazen-Basen der Formel (I) können in der Zusammensetzung gegebenenfalls teilweise oder vollständig in protonierter Form, d.h. formell als Salze von Säuren, vorliegen, vorzugsweise als Salze von schwachen Säuren, insbesondere von Carbonsäuren. Bevorzugt liegen sie in nicht protonierter Form vor.

Die Zusammensetzung umfasst ferner mindestens einen Alkoxysilangruppen-haltigen Polyether. Es können ein oder mehrere Alkoxysilangruppen-haltige Polyether eingesetzt werden. Der Polyether enthält mindestens eine, bevorzugt mindestens zwei, Alkoxysilangruppe(n), die an den Polyether gebunden sind. Der Alkoxysilangruppen-haltige Polyether weist im Mittel im Allgemeinen mehr als 1, bevorzugt 1,3 bis 4, bevorzugt 1,5 bis 3, besonders bevorzugt 1,7 bis 2,8 Alkoxysilangruppen pro Molekül auf. Die Alkoxysilangruppen sind bevorzugt endständig.

Der Alkoxysilangruppen-haltige Polyether weist bevorzugt ein Zahlenmittel des Molekulargewichts im Bereich von 1000 bis 30'000 g/mol, insbesondere von 2000 bis 20'000 g/mol, auf. Der Alkoxysilangruppen-haltige Polyether weist bevorzugt ein Silan-Equivalentgewicht von 300 bis 25'000 g/Eq, insbesondere von 500 bis 15'000 g/Eq, auf.

Die Alkoxysilangruppen des Alkoxysilangruppen-haltigen Polyethers weisen bevorzugt zwei oder drei, besonders bevorzugt drei, Alkoxy-Reste am Silicium-Atom auf. Die Alkoxy-Reste können gleich oder unterschiedlich sein; bevorzugt sind sie gleich. Bevorzugte Alkoxy-Reste weisen 1 bis 4 Kohlenstoffatome auf. Besonders bevorzugt sind Methoxy- und Ethoxy-Reste.

Als Alkoxysilangruppen bevorzugt sind somit Dimethoxysilangruppen und Diethoxysilangruppen und besonders bevorzugt Trimethoxysilangruppen und Triethoxysilangruppen.

Der Alkoxysilangruppen-haltige Polyether enthält in der Polymerkette als Oxyalkylen-Einheiten bevorzugt Oxy(C₂-C₄-alkylen)-Einheiten, wie Oxyethylen-, Oxypropylen- oder Oxybutylen-Einheiten, als Ethereinheiten, wobei Oxypropylen-Gruppen besonders bevorzugt sind. Der Alkoxysilangruppen-haltige Polyether kann einen Typ von Oxyalkylen-Einheiten oder eine Kombination von zwei oder mehr unterschiedlichen Oxyalkylen-Einheiten enthalten, welche vorzugsweise blockweise angeordnet sind.

Der Alkoxysilangruppen-haltige Polyether kann in der Polymerkette neben den Oxyalkylen-Einheiten funktionelle Gruppen aufweisen, insbesondere Harnstoffgruppen, Urethangruppen, Thiourethangruppen, Estergruppen und/oder Amidgruppen, bevorzugt Harnstoffgruppen und/oder Urethangruppen. Die funktionellen Einheiten können zur Verlängerung der Polymerkette und/oder zur Anbindung der Alkoxysilangruppen dienen.

Besonders geeignete Alkoxysilangruppen-haltige Polyether sind abgeleitet von Polyoxyalkylenpolyolen, auch Polyetherpolyole oder Oligoetherole genannt, die gegebenenfalls über die genannten funktionellen Gruppen kettenverlängert werden und/oder an die gegebenenfalls funktionellen Gruppen zur Anbindung der Alkoxysilangruppen angebunden werden.

Die Polyoxyalkylenpolye sind bevorzugt Polymerisationsprodukte von Ethylenoxid, 1,2-Propylenoxid, 1,2-oder 2,3-Butylenoxid, Oxetan, Tetrahydrofuran oder Mischungen davon, eventuell polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.

Besonders geeignet sind Polyoxyalkylendiole oder Polyoxyalkylentriole, insbesondere Polyoxyethylen- und Polyoxypropylendi- und -triole. Speziell geeignet sind Polyoxyalkylendiole und -triole mit einem Ungesättigtheitsgrad tiefer als 0,02 mEq/g und mit einem Zahlenmittel des Molekulargewichts im Bereich von 1000 bis 30000 g/mol, sowie Polyoxypropylendiole und -triole mit einem Zahlenmittel des Molekulargewichts von 400 bis 8000 g/mol.

Ebenfalls besonders geeignet sind sogenannte Ethylenoxid-terminierte ("EOendcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen.

Die Polyether können gegebenenfalls funktionelle Gruppen enthalten, um darüber die Alkylsilangruppe an den Polyether anzubinden. Die Anbindung der funktionellen Gruppen an den Polyether kann auf übliche, dem Fachmann bekannte Weise erfolgen.

Der Alkoxysilangruppen-haltige Polyether ist bevorzugt erhältlich aus
- der Hydrosilylierung von endständige Allylgruppen aufweisenden, gegebenenfalls kettenverlängerten Polyethern mit Hydrosilanen, oder
- der Michael-artigen Umsetzung von endständige (Meth)acrylgruppen aufweisenden, gegebenenfalls kettenverlängerten Polyethern mit Aminosilanen oder Mercaptosilanen, oder
- der Umsetzung von Alkoxysilangruppen aufweisenden Polyethern aus der Copolymerisation von Alkylenoxiden und Epoxysilanen mit Polyisocyanaten, oder
- der Umsetzung von endständige Hydroxylgruppen aufweisenden, gegebenenfalls kettenverlängerten Polyethern, insbesondere Polyetherpolyolen oder OH-terminierte Polyether-Polyurethan-Prepolymere, mit Isocyanatosilanen, oder
- der Umsetzung von endständige Isocyanatgruppen aufweisenden, gegebenenfalls kettenverlängerten Polyethern, insbesondere NCO-terminierten Polyether-Polyurethan-Prepolymeren (NCO-Prepolymere), mit Aminosilanen, Hydroxysilanen oder Mercaptosilanen.

Besonders bevorzugt ist der Alkoxysilangruppen-haltige Polyether erhältlich aus der Umsetzung von einem NCO-Prepolymer mit Aminosilanen, Hydroxysilanen oder Mercaptosilanen, insbesondere Aminosilanen oder Hydroxysilanen.

Geeignete NCO-Prepolymere sind insbesondere erhältlich aus der Umsetzung von Polyetherpolyolen, insbesondere Polyoxyalkylendiolen oder Polyoxyalkylentriolen, bevorzugt Polyoxypropylendiolen oder Polyoxypropylentriolen, mit Polyisocyanaten, insbesondere Diisocyanaten.

Die Umsetzung kann dadurch erfolgen, dass das Polyol und das Polyisocyanat mit üblichen Verfahren, insbesondere bei Temperaturen von 50 °C bis 100 °C, gegebenenfalls unter Mitverwendung geeigneter Katalysatoren, insbesondere Aminen, Bismut- oder Zinkverbindungen, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind. Insbesondere wird der Überschuss an Polyisocyanat so gewählt, dass im resultierenden Polyurethanpolymer nach der Umsetzung aller Hydroxylgruppen des Polyols ein Gehalt an freien Isocyanatgruppen von 0,1 bis 5 Gew.-%, bevorzugt 0,2 bis 3 Gew.-%, bezogen auf das gesamte NCO-Prepolymer verbleibt. Bevorzugt sind NCO-Prepolymere mit dem genannten Gehalt an freien Isocyanatgruppen, welche aus der Umsetzung von Polyolen mit Polyisocyanaten in einem NCO/OH-Verhältnis von 1,5 / 1 bis 2,5 / 1, insbesondere 1,8 / 1 bis 2,2 / 1, erhalten werden.

Speziell geeignete Polyetherpolyole zur Herstellung des NCO-Prepolymers sind Polyoxyalkylendiole oder Polyoxyalkylentriole mit einem Ungesättigtheitsgrad tiefer als 0,02 mEq/g, insbesondere tiefer als 0,01 mEq/g, und einem Zahlenmittel des Molekulargewichts im Bereich von 1000 bis 20000 g/mol, sowie Polyoxypropylendiole und -triole mit einem Zahlenmittel des Molekulargewichts von 400 bis 8000 g/mol. Einzelheiten zu solchen Polyetherpolyolen wurden bereits vorstehend erläutert. Neben Polyetherpolyolen können anteilig auch andere Polyole eingesetzt werden, insbesondere Polyacrylatpolyole, sowie niedrigmolekulare zwei- oder mehrwertige Alkohole.

Als Polyisocyanat für die Herstellung des NCO-Prepolymers geeignet sind handelsübliche Polyisocyanate, insbesondere Diisocyanate, bevorzugt 1,6-Hexamethylendiisocyanat (HDI), 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI oder H₁₂MDI), 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), sowie Gemische dieser Polyisocyanate.

Die Umsetzung des NCO-Prepolymers mit dem Aminosilan, Hydroxysilan oder Mercaptosilan zum Alkoxysilangruppen-haltigen Polyether wird bevorzugt so durchgeführt, dass die Amino- bzw. Hydroxyl- bzw. Mercaptogruppen des Silans im Verhältnis zu den Isocyanatgruppen des NCO-Prepolymers mindestens stöchiometrisch vorhanden sind. Der so entstehende Alkoxysilangruppen-haltige Polyether ist frei von Isocyanatgruppen, was aus toxikologischer Sicht vorteilhaft ist. Die Umsetzung erfolgt bevorzugt bei einer Temperatur im Bereich von 20 °C bis 120 °C, insbesondere 40 °C bis 100 °C.

Geeignete Aminosilane sind primäre und sekundäre Aminosilane. Bevorzugt sind sekundäre Aminosilane, insbesondere N-Butyl-(3-aminopropyl)tri-methoxysilan und N-Ethyl-(3-amino-2-methylpropyl)trimethoxysilan sowie Addukte aus primären Aminosilanen, insbesondere 3-Aminopropyltrimethoxysilan und N-(2-Aminoethyl)-3-aminopropyltrimethoxysilan, und Michael-Akzeptoren, insbesondere Acrylaten und Maleinsäurediestern, sowie deren Analoga mit Ethoxy- anstelle von Methoxygruppen. Besonders bevorzugte Aminosilane sind die Addukte aus 3-Aminopropyltrimethoxysilan oder 3-Aminopropyltriethoxysilan und Maleinsäurediethylester.

Geeignete Hydroxysilane zur Umsetzung des NCO-Prepolymers sind insbesondere Hydroxysilane, welche eine sekundäre Hydroxylgruppe aufweisen. Bevorzugt sind Hydroxysilane erhältlich aus
- der Umsetzung von Epoxiden mit sekundären Aminosilanen, oder
- der Umsetzung von Epoxysilanen mit sekundären Aminen, oder
- der Umsetzung von primären Aminosilanen mit Lactonen oder cyclischen Carbonaten.

Geeignete Mercaptosilane zur Umsetzung des NCO-Prepolymers sind insbesondere 3-Mercaptopropylsilane, bevorzugt 3-Mercaptopropyltrimethoxysilan und 3-Mercaptopropyltriethoxysilan.

Geeignete kommerziell erhältliche Alkoxysilangruppen-haltige Polyether sind beispielsweise erhältlich unter den Markennamen MS Polymer™ (von Kaneka; Typen S203H, S303H, S227, S810, MA903 und S943), MS Polymer™ bzw. Silyl™ (von Kaneka; Typen SAT010, SAT030, SAT200, SAX350, SAX400, SAX725, MAX450, MAX951), Excestar® (von Asahi Glass Co.; Typen S2410, S2420, S3430, S3630), SPUR+* (von Momentive Performance Materials; Typen 1010LM, 1015LM, 1050MM), Vorasil™ (von Dow Chemical; Typen 602 und 604), Desmoseal® (von Bayer Material Science; Typen S XP 2458, S XP 2636, S XP 2749, S XP 2774 und S XP 2821), TEGOPAC® (von Evonik; Typen Seal 100, Bond 150, Bond 250), Polymer ST (von Hanse Chemie, Typen 47, 48, 61, 75, 77, 80, 81) und Geniosil® STP (von Wacker Chemie; Typen E10, E15, E30, E35).

Zusätzlich zum Alkoxysilangruppen-haltigen Polyether kann die erfindungsgemäße Zusammensetzung optional auch weitere Alkoxysilangruppen-haltige Polymere enthalten, insbesondere Alkoxysilangruppen-haltige Polyisobutylene oder Poly(meth)acrylate.

Die erfindungsgemäße Zusammensetzung kann ferner ein oder mehrere Additive enthalten, z.B. diejenigen, die für silanterminierte Polymere üblich sind. Beispiele sind Additive ausgewählt aus einem Organotitanat oder Organozirkonat, einem Weichmacher, einem Füllstoff bzw. einem Verstärker, einem Rheologie-Additiv, einem Silan-Haftvermittler oder -Vernetzer, einem Trocknungsmittel und einem Stabilisator. Es können mindestens ein oder zwei oder mehr dieser optionalen Additive oder gegebenenfalls eine Kombination aller genannten Additive in der Zusammensetzung enthalten sein. Die optionalen Additive werden im Folgenden näher erläutert.

Die erfindungsgemässe Zusammensetzung kann z.B. bevorzugt ferner mindestens ein Organotitanat oder -zirkonat umfassen. Als Organotitanat oder -zirkonat werden hier Ester und Chelate von Titan oder Zirkonium (Titansäurester, Titanchelate, Zirkoniumsäureester, Zirkoniumchelate) und Mischformen davon, die sowohl Alkoholat- als auch Chelatliganden aufweisen, bezeichnet. Solche Organotitanate und -zirkonate sind bekannt und im Handel erhältlich. Beispiele sind Bis(ethylacetoacetato)-diisobutoxy-titan(IV) (kommerziell erhältlich als Tyzor® IBAY von DuPont) oder Bis(ethylacetoacetato)-diisopropoxy-titan(IV) (Tyzor® DC von DuPont).

Die erfindungsgemäße Zusammensetzung kann weiterhin bevorzugt mindestens einen Weichmacher umfassen. Bevorzugte Beispiele für geeignete Weichmacher sind Ester organischer Carbonsäuren oder deren Anhydride, wie Phthalate, insbesondere Diisononylphthalat oder Diisodecylphthalat, hydrierte Phthalate, insbesondere Diisononyl-1,2-cyclohexandicarboxylat, Adipate, insbesondere Dioctyladipat, Azelate und Sebacate, Polyole, insbesondere Polyoxyalkylenpolyole oder Polyesterpolyole, organische Phosphor- und Sulfonsäureester oder Polybutene.

Die erfindungsgemäße Zusammensetzung kann bevorzugt weiterhin mindestens einen Füllstoff bzw. Verstärker umfassen. Bevorzugte Beispiele für den Füllstoff bzw. Verstärker sind Calciumcarbonat, wie gemahlene oder gefällte Calciumcarbonate, welche gegebenenfalls mit Stearaten beschichtet sind, insbesondere feinteiliges beschichtetes Calciumcarbonat, Russe, insbesondere industriell hergestellte Russe, die im Folgenden als "Russ" bezeichnet werden, sowie Kieselsäuren, insbesondere hochdisperse Kieselsäuren aus Pyrolyseprozessen.

Die erfindungsgemäße Zusammensetzung kann ferner bevorzugt mindestens ein Rheologie-Additiv umfassen, z.B. eine Harnstoffverbindung, ein Polyamidwachs oder eine pyrogene Kieselsäure.

Die erfindungsgemäße Zusammensetzung kann ferner bevorzugt mindestens einen Silan-Haftvermittler bzw. -Vernetzer umfassen. Bevorzugte Beispiele sind ein Aminosilan, ein Epoxysilan, ein (Meth)acrylsilan oder Oligomere dieser Silane.

Die erfindungsgemäße Zusammensetzung kann bevorzugt weiterhin mindestens ein Trocknungsmittel umfassen. Bevorzugte Beispiele sind Tetramethoxysilan, Tetraethoxysilan, Trimethoxymethylsilan, Triethoxymethylsilan, Trimethoxyvinylsilan, Triethoxyvinylsilan, Trimethoxyphenylsilan, Triethoxyphenylsilan, α-funktionelle Silane wie N-(Silylmethyl)-O-methyl-carbamate, insbesondere N-(Methyldimethoxysilylmethyl)-O-methylcarbamat, Orthoameisensäureester, Calciumoxid oder Molekularsiebe.

Die erfindungsgemäße Zusammensetzung kann gegebenenfalls mindestens einen Stabilisator gegen Wärme, Licht- und UV-Strahlung umfassen.

Die erfindungsgemäße Zusammensetzung kann einkomponentig oder mehrkomponentig, insbesondere zweikomponentig, formuliert sein. Bevorzugt ist sie einkomponentig formuliert.

Die erfindungsgemäße Zusammensetzung ist vorzugsweise eine Vergussmasse, eine Formmasse, ein Dichtstoff, ein Klebstoff, eine Beschichtungszusammensetzung, ein Primer oder eine Spachtelmasse.

Bevorzugte Anwendungsgebiete der erfindungsgemäßen Zusammensetzung sind als Dichtstoffe, Klebstoffe und Beschichtungszusammensetzungen für Anstriche, Lacke, Beläge und Beschichtungen, insbesondere für Bau- und Industrieanwendungen.

Die erfindungsgemäße Zusammensetzung kann in vielen Bereichen eingesetzt werden, beispielsweise als Dichtstoff, Klebstoff, Belag, Beschichtung, Lack, Voranstrich, Vergussmasse, Formteil, Folie oder Membran für Bau- und Industrieanwendungen, beispielsweise als Nahtabdichtung, Hohlraumversiegelung, Fugendichtstoff, Montageklebstoff, Karosserieklebstoff, Scheibenklebstoff, Sandwichelementklebstoff, Kaschierklebstoff, Laminatklebstoff, Verpackungsklebstoff, Holzklebstoff, Parkettklebstoff, Verankerungsklebstoff, Bodenbelag und -beschichtung, Balkon- und Dachbeschichtung, Betonschutzbeschichtung, Parkhausbeschichtung, Rohrbeschichtung, Korrosionsschutzbeschichtung, Textilbeschichtung, Primer, Dämpfungselement, Dichtungselement, Spachtelmasse, etc.

Nach der Aushärtung der Zusammensetzung durch Feuchtigkeit wird ein Produkt aus der ausgehärteten Zusammensetzung erhalten, das gegebenenfalls verklebte, abgedichtete, beschichtete Gegenstände oder Substrate umfasst, wobei die ausgehärtete Zusammensetzung bevorzugt ein elastischer Kunststoff ist. Die Erfindung betrifft daher auch ein Produkt, das eine erfindungsgemäße Zusammensetzung in ausgehärteter Form umfasst. Die ausgehärtete Zusammensetzung ist vorzugsweise ein elastischer Kunststoff.

Es folgen Beispiele zur weiteren Erläuterung der Erfindung, die die Erfindung aber in keiner Weise beschränken sollen.

### Beispiele

### Beschreibung der Messmethoden

Die Viskosität wurde auf einem thermostatisierten Kegel-Platten-Viskosimeter Physica MCR 300 (Kegeldurchmesser 20 mm, Kegelwinkel 1 °, Kegelspitze-Platten-Abstand 0,05 mm, Schergeschwindigkeit 0,1 bis 100 s⁻¹) bei einer Temperatur von 20 °C gemessen.

Unter Normklima wird eine Temperatur von 23±1 °C und 50±5% relative Luftfeuchtigkeit verstanden.

Die Hautbildungszeit (HBZ) wurde dadurch bestimmt, dass einige Gramm der Zusammensetzung in einer Schichtdicke von ca. 2 mm auf Pappkarton aufgetragen wurden und im Normklima die Zeitdauer gemessen wurde, bis beim leichten Antippen der Oberfläche der Zusammensetzung mittels einer Pipette aus LDPE erstmals keine Rückstände auf der Pipette mehr zurückblieben.

Die Oberflächenbeschaffenheit nach 24h bzw. 7 Tagen Aushärtungszeit im Normklima wurde haptisch geprüft.

Zugfestigkeit, Bruchdehnung und E-Modul (bei 0-5% sowie bei 0-100% Dehnung) wurden gemäß DIN EN 53504 bei einer Zuggeschwindigkeit von 200 mm/min. gemessen.

### Herstellung von Alkoxysilangruppen-haltigen Polyethern

### Alkoxysilanciruppen-haltiger Polyether STP-1

Unter Feuchtigkeitsausschluss wurden 1000 g Polyol Acclaim® 12200 (Polyoxypropylendiol mit niedrigem Ungesättigtheitsgrad, von Bayer; OH-Zahl 11,0 mg KOH/g), 43,6 g Isophorondiisocyanat (IPDI; Vestanat® IPDI, von Evonik), 126,4 g Diisodecylphthalat (DIDP) und 0,1 g Bismuttris(neodecanoat) (10 Gew.-% in DIDP) unter stetigem Rühren auf 90 °C aufgeheizt und auf dieser Temperatur belassen, bis der titrimetrisch bestimmte Gehalt an freien Isocyanatgruppen einen stabilen Wert von 0,63 Gew.-% erreicht hatte. Anschließend wurden 63,0 g N-(3-Trimethoxysilylpropyl)-amino-bernsteinsäurediethylester (Addukt aus 3-Aminopropyltrimethoxysilan und Maleinsäurediethylester; hergestellt nach den Angaben in US 5,364,955) eingemischt und die Mischung bei 90 °C solange gerührt, bis mittels FT-IR-Spektroskopie kein freies Isocyanat mehr nachgewiesen wurde. Der so erhaltene Trimethoxysilangruppen-haltige Polyether mit einem Silan-Equivalentgewicht von ca. 6880 g/Eq (aus den Einsatzmengen berechnet) wurde auf Raumtemperatur abgekühlt und unter Ausschluss von Feuchtigkeit aufbewahrt.

### Alkoxysilangruppen-haltiger Polyether STP-2

Unter Feuchtigkeitsausschluss wurden 1000 g Polyol Acclaim® 12200 (Polyoxypropylendiol mit niedrigem Ungesättigtheitsgrad, von Bayer; OH-Zahl 11,0 mg KOH/g), 43,6 g Isophorondiisocyanat (IPDI; Vestanat® IPDI, von Evonik), 126,4 g Diisodecylphthalat (DIDP) und 0,1 g Bismuttris(neodecanoat) (10 Gew.-% in DIDP) unter stetigem Rühren auf 90 °C aufgeheizt und auf dieser Temperatur belassen, bis der titrimetrisch bestimmte Gehalt an freien Isocyanatgruppen einen stabilen Wert von 0,64 Gew.-% erreicht hatte. Anschließend wurden 70,6 g N-(3-Triethoxysilylpropyl)-amino-bernsteinsäurediethylester (Addukt aus 3-Aminopropyltriethoxysilan und Maleinsäurediethylester) eingemischt und die Mischung bei 90 °C solange gerührt, bis mittels FT-IR-Spektroskopie kein freies Isocyanat mehr nachgewiesen wurde. Der so erhaltene Triethoxysilangruppen-haltige Polyether mit einem Silan-Equivalentgewicht von ca. 6920 g/Eq (aus den Einsatzmengen berechnet) wurde auf Raumtemperatur abgekühlt und unter Ausschluss von Feuchtigkeit aufbewahrt.

### Verwendung von Phosphazen-Basen in Alkoxysilangruppen-haltigem Polyether und entsprechende Zusammensetzungen

### Beispiele 1 bis 3 (nicht erfinderisch),Beispiel 4 (erfinderisch) und Vergleichbeispiele V1 bis V5

Eine Zusammensetzung aus 96,5 Gewichtsteilen Alkoxysilangruppen-haltigem Polyether STP-1, 0,5 Gewichtsteilen Vinyltrimethoxysilan (VTMO) und 3,0 Gewichtsteilen 3-Aminopropyltrimethoxysilan (AMMO) wurde mit verschiedenen Katalysatoren gemäß untenstehender Tabelle 1 vermengt und die Mischung auf Viskosität sowie Hautbildungszeit (HBZ) im Normklima, vor und nach Lagerung, geprüft. Die Hautbildungszeit wurde als Maß für die Aktivität des Katalysators in Bezug auf die Vernetzungsreaktion der Alkoxysilangruppen, d.h. für die Vernetzungsgeschwindigkeit, gewertet. Die Zunahme der Viskosität sowie der Hautbildungszeit wurde als Maß für die Lagerstabilität gewertet.

Weiterhin wurde die applizierte Mischung nach 24 Stunden im Normklima daraufhin geprüft, ob die Oberfläche wie gewünscht trocken war oder sich ein schmieriger Film gebildet hatte, was als Anzeichen für das Ausschwitzen des Katalysators aufgrund schlechter Verträglichkeit mit dem ausgehärteten Kunststoff gewertet wurde. Die Ergebnisse sind ebenfalls in Tabelle 1 wiedergegeben.

Die eingesetzten Phosphazen-Basen in den Beispielen 1 bis 4 waren tert.-Butylimino-tris(dimethylamino)-phosphoran (P₁-tBu) und tert.-Butylimino-tripyrrolidino-phosphoran (P₁-tBu-tris (= P₁tBu-tris(tetramethylen)). In den Vergleichsbeispielen 1 bis 5 (V1 bis V5) wurde ohne Katalysator oder mit den Vergleichkatalysatoren Tyzor® IBAY (Bis(ethylacetoacetato)-diisobutoxytitan(IV), von DuPont) und DBU (1,8-Diazabicyclo[5.4.0]undec-7-en) gearbeitet.

**Tabelle 1**

| Bsp. | Katalysator | Konz.¹⁾ | Viskosität²⁾ frisch | Viskosität²⁾ gelagert³⁾ | Viskositätszunahme | HBZ (min.) | | Oberfläche nach 24h |
|---|---|---|---|---|---|---|---|---|
| | | | | | | frisch | gelagert³ | |
| V1 | - | - | 32,7 | 30,4 | -7% | 100 | 120 | trocken |
| V2 | Tyzor® IBAY | 2,0 | 40,4 | 49,5 | 23% | 45 | 100 | trocken |
| V3 | DBU | 2,0 | 36,7 | 37,5 | 2% | 32 | 45 | stark schmierig |
| V4 | DBU | 1,0 | 31,5 | 31,6 | 0% | 35 | 50 | schmierig |
| V5 | Tyzor® IBAY DBU | 1,0 | 38,1 | 41,9 | 10% | 20 | 50 | leicht schmierig |
| | | 0,5 | | | | | | |
| 1 | P₁-tBu | 2,0 | 34,8 | 33,3 | -4% | 30 | 40 | leicht schmierig |
| 2 | P₁-tBu-tris | 2,0 | 36,8 | 37,5 | 2% | 20 | 27 | leicht schmierig |
| 3 | P₁-tBu-tris | 1,0 | 33,4 | 30,8 | -8% | 25 | 37 | fast trocken |
| 4 | Tyzor® IBAY P₁-tBu-tris | 1,0 | 46,8 | 44,5 | -4% | 12 | 16 | trocken |
| | | 0,5 | | | | | | |

| | | | | | | | | |
|---|---|---|---|---|---|---|---|---|
| ¹⁾ mmol Metallatome bzw. Amidingruppen bzw. Phosphazengruppen auf 100 g Alkoxysilangruppen-haltigen Polyether STP-1 ²⁾ in Pa s. ³⁾ während 7 Tagen bei 60 °C in geschlossenem Gebinde. | | | | | | | | |

Die eingesetzten Phosphazen-Basen P₁-tBu sowie P₁-tBu-tris weisen eine höhere Aktivität (pro mol-Equivalent) auf als die Vergleichskatalysatoren Tyzor® IBAY und DBU. Die Lagerstabilität ist besser im Vergleich mit Tyzor® IBAY, leicht besser im Vergleich mit DBU; in der Kombination mit Tyzor® IBAY ist die Lagerstabilität besser als bei DBU. Mit den Phosphazen-Basen kommt es deutlich weniger zum Ausschwitzen als mit DBU.

### Beispiel 5 (nicht erfinderisch) Beispiel 6 (erfinderisch) und Vergleichsbeispiele V6 bis V9

Eine Zusammensetzung aus 95,9 Gewichtsteilen Alkoxysilangruppen-haltigem Polyether STP-2, 0,4 Gewichtsteilen Vinyltriethoxysilan (VTEO) und 3,7 Gewichtsteilen N-(2-Aminoethyl)-3-aminopropyl-triethoxysilan (DAEO) wurde mit verschiedenen Katalysatoren gemäß untenstehender Tabelle 2 vermengt und die Mischung wie oben beschrieben auf Viskosität, Hautbildungszeit (HBZ) und Oberflächenbeschaffenheit nach 24h geprüft. Die Ergebnisse sind ebenfalls in Tabelle 2 wiedergegeben. Der Vergleichskatalysator DBTDL ist Dibutylzinn(IV)-dilaurat.

Aus Tabelle 2 ist ersichtlich, dass die eingesetzte Phosphazen-Base P₁-tBu-tris im langsam vernetzenden Triethoxysilangruppen-haltigen Polyether eine höhere Aktivität (pro mol-Equivalent) aufweist als die Vergleichskatalysatoren Tyzor® IBAY und DBU. In Kombination mit Tyzor® IBAY werden sogar deutlich kürzere Hautbildungszeiten erreicht als mit dem Organozinn-Katalysator DBTDL. Die Vernetzung der Vergleichsmischungen mit Tyzor® IBAY und DBU ist nach 24h noch nicht abgeschlossen, was sich an der klebrigen bis flüssigen Oberfläche zeigt. Mit der Phosphazen-Base P₁-tBu-tris hingegen ist die Oberfläche nach 24h nur noch wenig klebrig, ähnlich wie mit DBTDL oder sogar besser.

**Tabelle 2**

| Bsp. | Katalysator | Konz.¹⁾ | Viskosität²⁾ frisch | Viskosität²⁾ gelagert³⁾ | Viskositätszunahme | HBZ | | Oberfläche nach 24h |
|---|---|---|---|---|---|---|---|---|
| | | | | | | frisch | gelagert³⁾ | |
| V6 | DBTDL | 0,4 | 65,2 | 68,9 | 6% | 3h 10' | 3h 30' | leicht klebrig |
| V7 | Tyzor® IBAY | 1,5 | 61,5 | 71,2 | 16% | >12h | >12h | (flüssig) |
| V8 | DBU | 1,5 | 58,5 | 72,7 | 2% | 5h 20' | 6h 15' | klebrig, schmierig |
| V9 | Tyzor® IBAY | 0,75 | 68,7 | 74,9 | 9% | 6h 10' | >8h | klebrig, leicht schmierig |
| | DBU | 0,75 | | | | | | |
| 5 | P₁-tBu-tris | 1,5 | 58,7 | 71,0 | 21% | 5h 10' | 4h 40' | leicht klebrig |
| 6 | Tyzor® IBAY P₁-tBu-tris | 0,75 | 70,9 | 75,8 | 7% | 42' | 60' | trocken |
| | | 0,75 | | | | | | |

| | | | | | | | | |
|---|---|---|---|---|---|---|---|---|
| ¹⁾ mmol Metallatome bzw. Amidingruppen bzw. Phosphazengruppen auf 100 g Alkoxysilangruppen-haltigen Polyether STP-2 ²⁾ in Pa s. ³⁾ während 7 Tagen bei 60 °C in geschlossenem Gebinde. | | | | | | | | |

### Beispiele 7 bis 8 und Vergleichsbeispiele V10 bis V13

In einem Planetenmischer wurden 37,6 Gewichtsteile Alkoxysilangruppen-haltiger Polyether STP-1, 60,0 Gewichtsteile gemahlene Kreide (Omyacarb® 5 GU), 1,2 Gewichtsteile Vinyltrimethoxysilan (VTMO), 1,2 Gewichtsteile 3-Aminopropyltrimethoxysilan (AMMO) sowie verschiedene Katalysatoren gemäß untenstehender Tabelle 3 vermengt und die Mischung auf Hautbildungszeit (HBZ) im Normklima geprüft. Weiterhin wurde von der Mischung ein Film von 2 mm Dicke hergestellt, während 7 Tagen im Normklima aushärten gelassen und auf mechanische Eigenschaften sowie Oberflächenbeschaffenheit nach 7d geprüft. Die Ergebnisse sind ebenfalls in Tabelle 3 gezeigt.

Die erfindungsgemäße Zusammensetzung umfassend eine Phosphazen-Base als Katalysator härtet sehr schnell zu einem mechanisch guten elastischen Material aus, welches eine trockene Oberfläche aufweist.

**Tabelle 3**

| Bsp. | Katalysator | Konz.¹⁾ | HBZ | Zugfestigkeit [MPa] | Bruchdehnung | E-Modul 0-5% [MPa] | E-Modul 0-100% [MPa] | Oberfläche nach 7d |
|---|---|---|---|---|---|---|---|---|
| V10 | - | - | 3h | 2,4 | 130% | 4,8 | 2,2 | trocken |
| V11 | Tyzor® IBAY | 1,2 | 40' | 2,4 | 140% | 4,5 | 2,2 | trocken |
| V12 | DBU | 0,8 | 40' | 2,5 | 160% | 5,7 | 2,3 | leicht schmierig |
| V13 | Tyzor® IBAY | 0,6 | 12' | 2,6 | 190% | 5,2 | 2,3 | fast trocken |
| | DBU | 0,4 | | | | | | |
| 7 | P₁-tBu-tris | 0,8 | 20' | 2,4 | 120% | 5,9 | 2,4 | trocken |
| 8 | Tyzor® IBAY | 0,6 | 7' | 2,4 | 130% | 5,2 | 22 | trocken |
| | P₁-tBu-tris | 0,4 | | | | | | |

| | | | | | | | | |
|---|---|---|---|---|---|---|---|---|
| ¹⁾ mmol Metallatome bzw. Amidingruppen bzw. Phosphazengruppen auf 100 g Alkoxysilangruppen-haltigen Polyether STP-1 | | | | | | | | |

## Patentansprüche

1. Verwendung einer Phosphazen-Base der Formel (I) 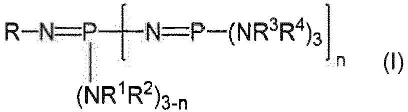 worin
n 0, 1, 2 oder 3 ist;
R ein Wasserstoff-Rest oder ein Alkyl-Rest mit 1 bis 10 Kohlenstoffatomen ist;
R¹ und R² jeweils unabhängig voneinander ein Alkyl-Rest mit 1 bis 10 Kohlenstoffatomen sind oder R¹ und R² zusammen einen Alkylen-Rest mit 4 bis 6 Kohlenstoffatomen bilden, wobei, wenn n 0 oder 1 ist, alternativ zwei Reste R¹ zusammen einen Alkylen-Rest mit 2 oder 3 Kohlenstoffatomen bilden können; und
R³ und R⁴ jeweils unabhängig voneinander ein Alkyl-Rest mit 1 bis 10 Kohlenstoffatomen sind oder R³ und R⁴ zusammen einen Alkylen-Rest mit 4 bis 6 Kohlenstoffatomen bilden,
als Katalysator für die Vernetzung von Alkoxysilangruppen-haltigen Polyethern mittels Feuchtigkeit in Anwesenheit von mindestens einem Organotitanat oder -zirkonat.

2. Zusammensetzung, umfassend
mindestens einen Alkoxysilangruppen-haltigen Polyether,
mindestens ein Organotitanat oder -zirkonat und
mindestens eine Phosphazen-Base der Formel (I) 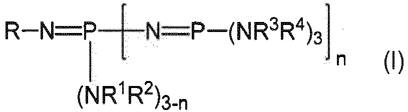 worin
n 0, 1, 2 oder 3 ist;
R ein Wasserstoff-Rest oder ein Alkyl-Rest mit 1 bis 10 Kohlenstoffatomen ist;
R¹ und R² jeweils unabhängig voneinander ein Alkyl-Rest mit 1 bis 10 Kohlenstoffatomen sind oder R¹ und R² zusammen einen Alkylen-Rest mit 4 bis 6 Kohlenstoffatomen bilden, wobei, wenn n 0 oder 1 ist, alternativ zwei Reste R¹ zusammen einen Alkylen-Rest mit 2 oder 3 Kohlenstoffatomen bilden können; und
R³ und R⁴ jeweils unabhängig voneinander einen Alkyl-Rest mit 1 bis 10 Kohlenstoffatomen sind oder R³ und R⁴ zusammen einen Alkylen-Rest mit 4 bis 6 Kohlenstoffatomen bilden.

3. Zusammensetzung nach Anspruch 2, wobei in der Phosphazen-Base der Formel (I) n 0 oder 1 ist.

4. Zusammensetzung nach Anspruch 2 oder Anspruch 3, wobei in der Phosphazen-Base der Formel (I) R ein Alkyl-Rest mit 1 bis 10 Kohlenstoffatomen, bevorzugt ein Alkyl-Rest mit 4 Kohlenstoffatomen ist.

5. Zusammensetzung nach irgendeinem der Ansprüche 2 bis 4, wobei in der Phosphazen-Base der Formel (I)
R¹ und R² jeweils unabhängig voneinander ein Alkyl-Rest mit 1 bis 10 Kohlenstoffatomen sind oder R¹ und R² zusammen einen Alkylen-Rest mit 4 Kohlenstoffatomen bilden, wobei, wenn n 0 oder 1 ist, alternativ zwei Reste R¹ zusammen einen Alkylen-Rest mit 3 Kohlenstoffatomen bilden können; und/oder
R³ und R⁴ jeweils unabhängig voneinander ein Alkyl-Rest mit 1 bis 10 Kohlenstoffatomen sind oder R³ und R⁴ zusammen einen Alkylen-Rest mit 4 Kohlenstoffatomen bilden.

6. Zusammensetzung nach irgendeinem der Ansprüche 2 bis 5, wobei die Phosphazen-Base der Formel (I) ausgewählt ist aus tert.-Butylimino-tris(dimethylamino)-phosphoran (P₁-t-Bu), tert.-Butylimino-tripyrrolidino-phosphoran (BTPP oder P₁-t-Bu-tris(tetramethylen)), tert.-Octylimino-tris(dimethylamino)-phosphoran (P₁-t-Oct), 1-Ethyl-2,2,4,4,4-pentakis(dimethylamino)-2λ⁵,4λ⁵-catenadi(phosphazen) (P₂-Et), 1-tert.-Butyl-2,2,4,4,4-pentakis(dimethylamino)-2λ⁵,4λ⁵-catenadi(phosphazen) (P₂-t-Bu) und 2-tert.-Butylimino-2-diethylamino-1,3-dimethyl-perhydro-1,3,2-diazaphosphorin (BEMP).

7. Zusammensetzung nach irgendeinem der Ansprüche 2 bis 6, wobei der Alkoxysilangruppen-haltige Polyether im Mittel 1,3 bis 4 Alkoxysilangruppen pro Molekül aufweist.

8. Zusammensetzung nach irgendeinem der Ansprüche 2 bis 7, wobei der Alkoxysilangruppen-haltige Polyether in der Polymerkette neben Oxyalkylen-Einheiten mindestens eine funktionelle Gruppe ausgewählt aus Harnstoffgruppen, Urethangruppen, Thiourethangruppen, Estergruppen und/oder Amidgruppen, bevorzugt Harnstoffgruppen und/oder Urethangruppen, aufweist.

9. Zusammensetzung nach irgendeinem der Ansprüche 2 bis 8, wobei der Alkoxysilangruppen-haltige Polyether ein Zahlenmittel des Molekulargewichts Mn, gemessen mittels GPC gegen Polystyrol-Standard, im Bereich von 1000 bis 30'000 g/mol, bevorzugt von 2000 bis 20'000 g/mol, aufweist.

10. Zusammensetzung nach irgendeinem der Ansprüche 2 bis 9, wobei der Alkoxysilangruppen-haltige Polyether erhältlich ist aus der Hydrosilylierung von endständige Allylgruppen aufweisenden, gegebenenfalls kettenverlängerten Polyethern mit Hydrosilanen, oder der Michael-artigen Umsetzung von endständige (Meth)acrylgruppen aufweisenden, gegebenenfalls kettenverlängerten Polyethern mit Aminosilanen oder Mercaptosilanen, oder
der Umsetzung von Alkoxysilangruppen aufweisenden Polyethern aus der Copolymerisation von Alkylenoxiden und Epoxysilanen mit Polyisocyanaten, oder
der Umsetzung von endständige Hydroxylgruppen aufweisenden, gegebenenfalls kettenverlängerten Polyethern mit Isocyanatosilanen, oder
der Umsetzung von endständige Isocyanatgruppen aufweisenden, gegebenenfalls kettenverlängerten Polyethern mit Aminosilanen, Hydroxysilanen oder Mercaptosilanen.

11. Zusammensetzung nach irgendeinem der Ansprüche 2 bis 10, wobei die Zusammensetzung mindestens ein Additiv ausgewählt aus einem Weichmacher, einem Füllstoff bzw. einem Verstärker, einem Rheologie-Additiv, einem Silan-Haftvermittler oder -Vernetzer, einem Trocknungsmittel und einem Stabilisator umfasst.

12. Zusammensetzung nach irgendeinem der Ansprüche 2 bis 11, wobei die Zusammensetzung eine einkomponentige oder eine mehrkomponentige, insbesondere eine zweikomponentige Zusammensetzung, ist, wobei die Zusammensetzung bevorzugt eine einkomponentige Zusammensetzung ist.

13. Zusammensetzung nach irgendeinem der Ansprüche 2 bis 12, wobei die Zusammensetzung eine Vergussmasse, eine Formmasse, ein Dichtstoff, ein Klebstoff, eine Beschichtungszusammensetzung, ein Primer oder eine Spachtelmasse ist.

14. Produkt, das eine ausgehärtete Zusammensetzung umfasst, wobei die Zusammensetzung eine Zusammensetzung nach irgendeinem der Ansprüche 2 bis 13 ist, wobei die ausgehärtete Zusammensetzung vorzugsweise ein elastischer Kunststoff ist.

## Claims

1. Use of a phosphazene base of formula (I) 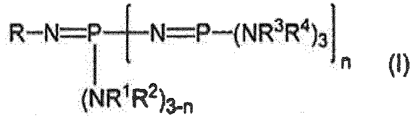 in which
n is 0, 1, 2 or 3,
R is a hydrogen radical or an alkyl radical having 1 to 10 carbon atoms,
R¹ and R² are each independently an alkyl radical having 1 to 10 carbon atoms, or R¹ and R² together form an alkylene radical having 4 to 6 carbon atoms, wherein, when n is 0 or 1, alternatively two radicals R¹ may together form an alkylene radical having 2 or 3 carbon atoms; and
R³ and R⁴ are each independently an alkyl radical having 1 to 10 carbon atoms, or R³ and R⁴ together form an alkylene radical having 4 to 6 carbon atoms,
as catalyst for crosslinking polyethers containing alkoxysilane groups by means of moisture in the presence of at least one organotitanate or organozirconate.

2. Composition comprising
at least one polyether containing alkoxysilane groups,
at least one organotitanate or organozirconate, and
at least one phosphazene base of formula (I) 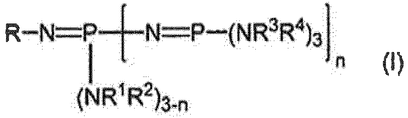 in which
n is 0, 1, 2 or 3,
R is a hydrogen radical or an alkyl radical having 1 to 10 carbon atoms,
R¹ and R² are each independently an alkyl radical having 1 to 10 carbon atoms, or R¹ and R² together form an alkylene radical having 4 to 6 carbon atoms, wherein, when n is 0 or 1, alternatively two radicals R¹ may together form an alkylene radical having 2 or 3 carbon atoms; and
R³ and R⁴ are each independently an alkyl radical having 1 to 10 carbon atoms, or R³ and R⁴ together form an alkylene radical having 4 to 6 carbon atoms.

3. Composition according to Claim 2, wherein, in the phosphazene base of formula (I), n is 0 or 1.

4. Composition according to Claim 2 or Claim 3, wherein, in the phosphazene base of formula (I), R is an alkyl radical having 1 to 10 carbon atoms, preferably an alkyl radical having 4 carbon atoms.

5. Composition according to any one of Claims 2 to 4, wherein, in the phosphazene base of formula (I),
R¹ and R² are each independently an alkyl radical having 1 to 10 carbon atoms, or R¹ and R² together form an alkylene radical having 4 carbon atoms, wherein, when n is 0 or 1, alternatively two radicals R¹ may together form an alkylene radical having 3 carbon atoms; and/or
R³ and R⁴ are each independently an alkyl radical having 1 to 10 carbon atoms, or R³ and R⁴ together form an alkylene radical having 4 carbon atoms.

6. Composition according to any one of Claims 2 to 5, wherein the phosphazene base of formula (I) is selected from tert-butylimino-tris(dimethylamino)phosphorane (P₁-t-Bu), tert-butylimino-tripyrrolidinophosphorane (BTPP or P₁-t-Bu-tris(tetramethylene)), tert-octylimino-tris(dimethylamino)phosphorane (P₁-t-Oct), 1-ethyl-2,2,4,4,4-pentakis(dimethylamino)-2λ⁵,4λ⁵-catenadi(phosphazene) (P2-Et),1-tert-butyl-2,2,4,4,4-pentakis (dimethylamino) -2λ⁵, 4λ⁵-catenadi (phosphazene) (P₂-t-Bu) and 2-tert-butylimino-2-diethylamino-1,3-dimethyl-perhydro-1,3,2-diazaphosphorine (BEMP).

7. Composition according to any one of Claims 2 to 6, wherein the polyether containing alkoxysilane groups has an average of 1.3 to 4 alkoxysilane groups per molecule.

8. Composition according to any one of Claims 2 to 7, wherein the polyether containing alkoxysilane groups has in the polymer chain, as well as oxyalkylene units, at least one functional group selected from urea groups, urethane groups, thiourethane groups, ester groups and/or amide groups, preferably urea groups and/or urethane groups.

9. Composition according to any one of Claims 2 to 8, wherein the polyether containing alkoxysilane groups has a number-average molecular weight Mn, measured using GPC against polystyrene standard, in the range from 1000 to 30 000 g/mol, preferably from 2000 to 20 000 g/mol.

10. Composition according to any one of Claims 2 to 9, wherein the polyether containing alkoxysilane groups is obtainable from the hydrosilylation of optionally chain-extended polyethers having terminal allyl groups with hydrosilanes, or
the Michael reaction of optionally chain-extended polyethers having terminal (meth)acrylic groups with aminosilanes or mercaptosilanes, or
the reaction of polyethers having alkoxysilane groups from the copolymerization of alkylene oxides and epoxysilanes with polyisocyanates, or
the reaction of optionally chain-extended polyethers having terminal hydroxyl groups with isocyanatosilanes, or
the reaction of optionally chain-extended polyethers having terminal isocyanate groups with aminosilanes, hydroxysilanes or mercaptosilanes.

11. Composition according to any one of Claims 2 to 10, wherein the composition comprises at least one additive selected from a plasticizer, a filler or a reinforcer, a rheology additive, a silane adhesion promoter or crosslinker, a dessicant and a stabilizer.

12. Composition according to any one of Claims 2 to 11, wherein the composition is a one-component or multicomponent composition, especially a two-component composition, wherein the composition is preferably a one-component composition.

13. Composition according to any one of Claims 2 to 12, wherein the composition is a potting compound, a moulding compound, a sealant, an adhesive, a coating composition, a primer or a spackling compound.

14. Product comprising a cured composition, wherein the composition is a composition according to any one of Claims 2 to 13, wherein the cured composition is preferably an elastic polymer.

## Revendications

1. Utilisation d'une base phosphazène de formule (I) 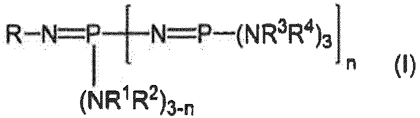 dans laquelle
n vaut 0, 1, 2 ou 3 ;
R est un radical hydrogène ou un radical alkyle de 1 à 10 atomes de carbone ;
R¹ et R² représentent chacun indépendamment l'un de l'autre un radical alkyle de 1 à 10 atomes de carbone, ou R¹ et R² forment ensemble un radical alkylène de 4 à 6 atomes de carbone ; lorsque n vaut 0 ou 1, deux radicaux R¹ pouvant en variante former ensemble un radical alkylène de 2 à 3 atomes de carbone ; et
R³ et R⁴ représentent chacun indépendamment l'un de l'autre un radical alkyle de 1 à 10 atomes de carbone, ou R³ et R⁴ forment ensemble un radical alkylène de 4 à 6 atomes de carbone,
en tant que catalyseur pour la réticulation de polyéthers contenant des groupes alcoxysilane au moyen d'humidité en présence d'au moins un organotitanate ou -zirconate.

2. Composition, comprenant :
au moins un polyéther contenant des groupes alcoxysilane,
au moins un organotitanate ou -zirconate, et
au moins une base phosphazène de formule (I) 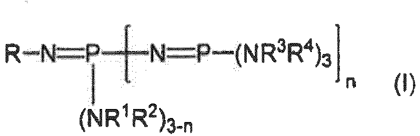 dans laquelle
n vaut 0, 1, 2 ou 3 ;
R est un radical hydrogène ou un radical alkyle de 1 à 10 atomes de carbone ;
R¹ et R² représentent chacun indépendamment l'un de l'autre un radical alkyle de 1 à 10 atomes de carbone, ou R¹ et R² forment ensemble un radical alkylène de 4 à 6 atomes de carbone ; lorsque n vaut 0 ou 1, deux radicaux R¹ pouvant en variante former ensemble un radical alkylène de 2 à 3 atomes de carbone ; et
R³ et R⁴ représentent chacun indépendamment l'un de l'autre un radical alkyle de 1 à 10 atomes de carbone, ou R³ et R⁴ forment ensemble un radical alkylène de 4 à 6 atomes de carbone.

3. Composition selon la revendication 2, dans laquelle n vaut 0 ou 1 dans la base phosphazène de formule (I).

4. Composition selon la revendication 2 ou la revendication 3, dans laquelle, dans la phase phosphazène de formule (I), R est un radical alkyle de 1 à 10 atomes de carbone, de préférence un radical alkyle de 4 atomes de carbone.

5. Composition selon l'une quelconque des revendications 2 à 4, dans laquelle, dans la base phosphazène de formule (I),
R¹ et R² représentent chacun indépendamment l'un de l'autre un radical alkyle de 1 à 10 atomes de carbone, ou R¹ et R² forment ensemble un radical alkylène de 4 atomes de carbone ; lorsque n vaut 0 ou 1, deux radicaux R¹ pouvant en variante former ensemble un radical alkylène de 3 atomes de carbone ; et/ou
R³ et R⁴ représentent chacun indépendamment l'un de l'autre un radical alkyle de 1 à 10 atomes de carbone, ou R³ et R⁴ forment ensemble un radical alkylène de 4 atomes de carbone.

6. Composition selon l'une quelconque des revendications 2 à 5, dans laquelle la base phosphazène de formule (I) est choisie parmi le tert.-butylimino-tris(diméthylamino)-phosphorane (P₁-t-Bu), le tert.-butylimino-tripyrrolidino-phosphorane (BTPP ou P₁-t-Bu-tris(tétraméthylène)), le tert.-octylimino-tris(diméthylamino)-phosphorane (P₁-t-Oct), le 1-éthyl-2,2,4,4,4-pentakis(diméthylamino)-2λ⁵,4λ⁵-caténadi(phosphazène) (P₂-Et), le 1-tert.-butyl-2,2,4,4,4-pentakis(diméthylamino)-2λ⁵,4λ⁵-caténadi(phosphazène) (P₂-t-Bu) et la 2-tert.-butylimino-2-diéthylamino-1, 3-diméthyl-perhydro-1, 3,2-diazaphosphorine (BEMP).

7. Composition selon l'une quelconque des revendications 2 à 6, dans laquelle le polyéther contenant des groupes alcoxysilane comprend en moyenne 1,3 à 4 groupes alcoxysilane par molécule.

8. Composition selon l'une quelconque des revendications 2 à 7, dans laquelle le polyéther contenant des groupes alcoxysilane comprend dans la chaîne polymère en plus des unités oxyalkylène au moins un groupe fonctionnel choisi parmi les groupes urée, les groupes uréthane, les groupes thiouréthane, les groupes ester et/ou les groupes amide, de préférence les groupes urée et/ou les groupes uréthane.

9. Composition selon l'une quelconque des revendications 2 à 8, dans laquelle le polyéther contenant des groupes alcoxysilane présente une moyenne en nombre du poids moléculaire Mn, mesurée par CPG contre un étalon polystyrène, dans la plage allant de 1 000 à 30 000 g/mol, de préférence de 2 000 à 20 000 g/mol.

10. Composition selon l'une quelconque des revendications 2 à 9, dans laquelle le polyéther contenant des groupes alcoxysilane peut être obtenu par l'hydrosilylation de polyéthers comprenant des groupes allyle terminaux, éventuellement à chaîne allongée, avec des hydrosilanes, ou
la réaction de type Michael de polyéthers comprenant des groupes (méth)acryliques terminaux, éventuellement à chaîne allongée, avec des aminosilanes ou des mercaptosilanes, ou
la réaction de polyéthers comprenant des groupes alcoxysilane issus de la copolymérisation d'oxydes d'alkylène et d'époxysilanes avec des polyisocyanates, ou
la réaction de polyéthers comprenant des groupes hydroxyle terminaux, éventuellement à chaîne allongée, avec des isocyanatosilanes, ou
la réaction de polyéthers comprenant des groupes isocyanate terminaux, éventuellement à chaîne allongée, avec des aminosilanes, des hydroxysilanes ou des mercaptosilanes.

11. Composition selon l'une quelconque des revendications 2 à 10, dans laquelle la composition comprend au moins un additif choisi parmi un plastifiant, une charge ou un agent renforçant, un additif de rhéologie, un promoteur d'adhésion ou un agent de réticulation silane, un agent siccatif et un stabilisateur.

12. Composition selon l'une quelconque des revendications 2 à 11, dans laquelle la composition est une composition monocomposante ou multicomposante, notamment une composition bicomposante, la composition étant de préférence une composition monocomposante.

13. Composition selon l'une quelconque des revendications 2 à 12, dans laquelle la composition est un matériau de scellement, un matériau de moulage, un matériau d'étanchéité, un adhésif, une composition de revêtement, un agent primaire ou un matériau d'enduit.

14. Produit, qui comprend une composition durcie, la composition étant une composition selon l'une quelconque des revendications 2 à 13, la composition durcie étant de préférence un plastique élastique.
